# EUROPEAN PATENT SPECIFICATION

(11) **EP 0 593 769 B1**
(45) Date of publication and mention of the grant of the patent: **22.10.1997**
(21) Application number: 92915889.7
(22) Date of filing: 17.07.1992
(51) Int. Cl.: C08L 63/00, C08L 33/14, C08L 67/02, C08L 67/04, C08L 77/00, C08G 59/42, C08G 59/56, C08L 67/00

(54) **THERMOPLASTIC ELASTOMER COMPOSITION**
THERMOPLASTISCHE ELASTOMERZUSAMMENSETZUNG
COMPOSITION D'ELASTOMERE THERMOPLASTIQUE

(30) Priority: 18.07.1991 JP 203888/91; 18.07.1991 JP 203889/91
(43) Date of publication of application: 27.04.1994
(73) Proprietor: NIPPON ZEON CO., LTD., Chiyoda-ku Tokyo 100 (JP); GENERAL ELECTRIC COMPANY, Schenectady New York 12305 (US)
(72) Inventor: AONUMA, Mitsuyoshi, Shibuya-ku, Tokyo 151 (JP); SASAMOTO, Kimiaki, Yokohama-shi, Kanagawa 235 (JP); IKEGAMI, Kozo, Yokohama-shi, Kanagawa 222 (JP)
(74) Representative: VOSSIUS & PARTNER
(86) International application number: JP9200920
(87) International publication number: WO9302142

(56) References cited:
- EP-A- 0 285 256
- WO-A-89/05838
- WO-A-93/02143
- GB-A- 2 208 868
- JP-A- 1 266 154
- JP-A-63 081 158
- JP-A-63 081 159
- JP-A-63 142 056
- US-A- 3 723 569

## Description

### Technical Field

This invention relates to a thermoplastic elastomer composition exhibiting a good flexibility, a high modulus, a high heat aging resistance and a high compression set resistance.

### Background Art

Copolyester elastomers are multi-block copolymers which are mainly comprised of polyester recurring units and polyether recurring units. Copolyamide elastomers are multi-block copolymers which are mainly comprised of polyamide recurring units and polyester or polyether recurring units. Both copolyester elastomers and copolyamide elastomers have an appropriate flexibility.

However, these copolyester elastomers and copolyamide elastomers are too hard to use as an elastomer in the rubbery region, and have a poor flexibility and a poor strain recovery. To improve these properties, it is generally employed to enhance the content of soft segments in the copolyelastomer. However, the enhancement of the soft segment content reduces the melting point which leads to narrowing of the high-temperature range at which the elastomer is usable. Instead of enhancement of the soft segment content, it has been proposed to incorporate a softening agent such as a plasticizer in the copolymer elastomers. The incorporation of a softening agent has a problem such that the incorporated softening agent tends to exude to the surface or evaporate during the use of the elastomers, which leads to restoration to the reduced pliability.

To solve the above-mentioned problem, proposals have been made wherein a rubber is incorporated in the copolymer elastomers. For example, it has been proposed in Japanese Laid-open Patent Publication No. 1-266154 to incorporate an acrylic rubber having copolymerized therein 1 to 5% by weight of a reactive and curable monomer, in a copolyester elastomer to provide a crosslinked or uncrosslinked acrylic rubber-containing composition. The uncrosslinked composition has a poor compression set. The crosslinked composition is deteriorated especially when crosslinked with typical crosslinkers for an acrylic rubber, which are exemplified in the Japanese patent publication, such as a quaternary ammonium salt, a soap/a tertiary or quaternary amine, a red lead oxide/ethylene thiourea or a polyamine. Namely, the copolyester elastomer is degraded during milling or shaping of the composition or during the use of a shaped article, which leads to the reduction in performances of the shaped article.

In Japanese Laid-open Patent Publication (JPA) No. 1-306447, a composition is described which is comprised of a thermoplastic polyester resin such as polyethylene terephthalate or polybutylene terephthalate and an acrylic rubber crosslinked through a covalent bond. The crosslinked acrylic rubber is an acrylic rubber prepared by crosslinking a polyacrylate having an acid group, a hydroxyl group or an epoxy group as the crosslinking site with a polyamine, a polyisocyanate or a polyepoxide through a covalent bond. As the composition contains a rigid polyester resin, the content of the rubbery component must be high for imparting a satisfactory compression set to the composition, with the result of reduction in fluidity of the composition in the step of shaping.

Although a rubber composition comprising a polyetherester elastomer and an ethylene-acrylate copolymer rubber crosslinked with an isocyanate compound is described as one example of the composition in JPA 1-306447, this reference is silent on crosslinking system of an epoxy group in a rubber composition of a copolyester elastomer and an epoxy group-containing methacrylate or acrylate copolymer rubber.

As suggested in the above-described references, crosslinked rubber compositions comprising a copolyester elastomer and an acrylic rubber crosslinked and dispersed in the compositions exhibit improved flexibility and compression set resistance. But, a satisfactory crosslinking system of an acrylic rubber in a copolyester elastomer has not been found in the proposed crosslinked rubber compositions. Especially, a problem arises in that a copolyester elastomer tends to be readily deteriorated in a molten state by a crosslinker usually used for an acrylic rubber.

### Disclosure of the Invention

An object of the present invention is to provide a thermoplastic elastomer composition exhibiting a good flexibility, a high modulus, a high heat aging resistance, and a high compression set resistance, which comprises a copolyester elastomer or a copolyamide elastomer, and an epoxy group-containing methacrylate or acrylate copolymer rubber, and wherein the epoxy group-containing methacrylate or acrylate copolymer rubber is crosslinked and dispersed in the composition without deterioration of the copolyester and copolyamide elastomers and the entire composition.

In one aspect of the invention, there is provided a thermoplastic elastomer composition (which composition is hereinafter referred to as "first composition") comprising:
(A) 30 to 90% by weight of a thermoplastic copolyester elastomer or a thermoplastic copolyamide elastomer, and
(B) 10 to 70% by weight of an epoxy group-containing methacrylate or acrylate copolymer rubber;
wherein component (B) is crosslinked with a crosslinking agent and dispersed in the composition; and said crosslinking agent is at least one member selected from:
(b) a combination of a compound having at least two carboxyl groups or at least one carboxylic anhydride group in the molecule with an imidazole compound, and
(c) a combination of an isocyanuric acid compound with an imidazole compound.

In another aspect of the invention, there is provided a thermoplastic elastomer composition (which composition is hereinafter referred to "second composition") comprising:
(A) 30 to 90% by weight of a thermoplastic copolyester elastomer or a thermoplastic copolyesteramide elastomer, and
(B) 10 to 70% by weight of an epoxy group-containing methacrylate or acrylate copolymer rubber;
wherein component (B) is crosslinked with (a) a compound having at least two carboxyl groups or at least one carboxylic anhydride group in the molecule under kneading conditions and dispersed in the composition.

In the compositions of the invention, it is preferable that at least one of the following requirements is satisfied.
(i) the thermoplastic copolyester elastomer is at least one member selected from a copolyetherester elastomer, a polylactone-modified or lactone-modified copolyetherester elastomer and a copolyetherimideester elastomer.
(ii) the thermoplastic copolyamide elastomer, which is used in the first composition, is at least one member selected from a copolyetheresteramide elastomer and a copolyesteramide elastomer.
(iii) the epoxy group-containing methacrylate or acrylate copolymer rubber contains, as the epoxy group, units derived from at least one monomer containing an epoxy group selected from glycidyl methacrylate, glycidyl acrylate and allyl glycidyl ether.
(iv) the epoxy group-containing methacrylate or acrylate copolymer rubber contains 1 to 15% by weight of units derived from an epoxy group-containing monomer.
(v) the compound having at least two carboxyl groups or at least one carboxylic anhydride group in the molecule, which is used as the crosslinking agent for the epoxy group-containing methacrylate or acrylate copolymer rubber, either alone or in combination with the imidazole compound, is selected from aliphatic, alicyclic and aromatic polycarboxylic acids, partial or complete carboxylic anhydrides thereof, and partial or complete esters of these polycarboxylic acids or carboxylic anhydrides with a polyalkylene glycol or an alkylene glycol.
(vi) the component (b) and the component (c), which are used as the crosslinking agent for the epoxy group-containing methacrylate or acrylate copolymer rubber in the first composition, are a composite salt of the compound having at least two carboxyl groups or at least one carboxylic anhydride group in the molecule with the imidazole compound and a composite salt of the isocyanuric acid compound with the imidazole compound, respectively.

### Best Mode for Carrying Out the Invention

The composition of the invention comprises 30 to 90% by weight, preferably 40 to 80% by weight, of a thermoplastic copolyester elastomer or a thermoplastic copolyamide elastomer (which is a thermoplastic copolyesteramide elastomer in the second composition), and 70 to 10% by weight, preferably 60 to 20% by weight, of an epoxy group-containing methacrylate or acrylate copolymer rubber. In the second composition, the epoxy group-containing methacrylate or acrylate copolymer rubber is crosslinked with a compound having at least two carboxyl groups or at least one carboxylic anhydride group in the molecule. In the first composition, the epoxy group-containg methacrylate or acrylate copolymer rubber is crosslinked with (b) a combination of a compound having at least two carboxyl groups or at least one carboxylic anhydride group in the molecule with an imidazole compound and (c) a combination of an isocyanuric acid compound with an imidazole compound. If the amount of the thermoplastic copolyester or copolyamide elastomer is smaller than the above-mentioned range and the amount of the methacrylate or acrylate copolymer rubber is larger than the above-mentioned range, the processability of the composition is reduced. In contrast, if the amount of the thermoplastic copolyester or copolyamide elastomer is larger than the above-mentioned range and the amount of the methacrylate or acrylate copolymer rubber is smaller than the above-mentioned range, a rubber elasticity-imparting effect cannot be obtained.

As the thermoplastic copolyester elastomer used in the invention, there can be mentioned random and multi-block copolyesters which are comprised of polyester and polyether recurring units; polyester, polylactone (or lactone) and polyether recurring units; or polyester and polyimide-ether recurring units. Such random and multi-block copolyesters include copolyetherester elastomers, polylactone-modified or lactone-modified copolyetherester elastomers, and copolyetherimide elastomers.

Suitable thermoplastic copolyetherester elastomers and polylactone-modified or lactone-modified copolyetherester elastomers are produced by a conventional esterification and polycondensation process from (i) at least one diol, (ii) at least one dicarboxylic acid, (iii) at least one long chain ether glycol, and (iv) an optional at least one lactone or polylactone.

The diol (i) used for the production of the copolyetherester elastomers and their polylactone- or lactone-modified products includes saturated and unsaturated aliphatic, alicyclic and aromatic dihydroxy compounds. These diols preferably have a low molecular weight, i.e., a molecular weight of not higher than about 300. As typical examples of the aliphatic and alicyclic diols, there can be mentioned aliphatic and alicyclic diols having 2 to 15 carbon atoms such as ethylene glycol, propanediol, butanediol, pentanediol, 2-methylpropanediol, 2,2-dimethylpropanediol, hexanediol, decanediol, 2-octylundecanediol, 1,2-, 1,3- and 1,4-dihydroxycyclohexane, 1,2-, 1,3- and 1,4-cyclohexanedimethanol, butynediol and hexenediol. Of these, 1,4-butanediol and a mixture of 1,4-butanediol with hexanediol or butynediol are preferable. As typical examples of the aromatic diols, there can be mentioned aromatic diols having 6 to 19 carbon atoms such as resorcinol, hydroquinone, 1,5-dihydroxynaphthalene, 4,4'-dihydroxydiphenyl, bis(p-hydroxyphenyl)methane and 2,2-bis(p-hydroxyphenyl)propane.

Especially preferable diols are saturated aliphatic diols having 2 to 8 carbon atoms, and a mixture of such saturated aliphatic diols and a mixture of such saturated aliphatic diol and an unsaturated diol. In the case where two or more kinds of diols are used, preferably the same diol occupies at least about 50% by mole, more preferably at least 80% by mole, of the total amount of the diols. A most preferable diol mixture comprises at least 50% by mole of 1,4-butanediol.

The dicarboxylic acid (ii) used for the production of the copolyetherester elastomers and their polylactone- or lactone-modified products includes aliphatic, alicyclic and aromatic dicarboxylic acids. These dicarboxylic acids preferably have a low molecular weight, i.e., a molecular weight of not larger than about 350, but a carboxylic acid having a higher molecular weight such as a dimer acid can be used.

As typical examples of the aliphatic and alicyclic dicarboxylic acids, there can be mentioned sebacic acid, 1,2-cyclohexanedicarboxylic acid, 1,3-cyclohexanedicarboxylic acid, 1,4-cyclohexanedicarboxylic acid, adipic acid, glutaric acid, succinic acid, oxalic acid, azelaic acid, diethylmalonic acid, allylmalonic acid, 4-cyclohexene-1,2-dicarboxylic acid, 2-ethylsuberic acid, tetramethylsuccinic acid, cyclopentanedicarboxylic acid, decahydro-1,5-naphthalenedicarboxylic acid, 4,4'-bicyclohexyldicarboxylic acid, decahydro-2,6-naphthalenedicarboxylic acid, 4,4'-methylenebis(cyclohexane-carboxylic acid), 3,4-furandicarboxylic acid and 1,1-cyclobutanedicarboxylic acid, and dimer acids of these dicarboxylic acids. Of these, cyclohexanedicarboxylic acid, sebacic acid, glutaric acid and adipic acid are preferable.

As typical examples of the aromatic dicarboxylic acids, there can be mentioned terephthalic acid, phthalic acid, isophthalic acid, bi-benzoic acids, substituted dicarboxyl compounds having two benzene nuclei such as bis(p-carboxyphenyl)methane, oxybis(benzoic acid) and ethylene-1,2-bis(p-oxybenzoic acid); and 1,5-naphthalenedicarboxylic acid, 2,6-naphthalenedicarboxylic acid, 2,7-naphthalenedicarboxylic acid, phenanthrenedicarboxylic acid, anthracenedicarboxylic acid, 4,4'-sulfonyl-dibenzoic acid, and these derivatives having a substituent such as halo, or an alkyl, alkoxy or aryl group having 1 to 12 carbon atoms. Provided that the object of the invention can be achieved, these aromatic dicarboxylic acids can be used in combination with an aromatic dicarboxylic acid such as a hydroxy-acid, e.g., p-(β-hydroxyethoxy)benzoic )benzoic acid.

Among the dicarboxylic acids used for the production of the copolyetherester elastomers and their polylactone-modified or lactone-modified products, an aromatic dicarboxylic acid, a mixture of two or more aromatic dicarboxylic acids and a mixture of an aromatic dicarboxylic acid and an aliphatic and/or alicyclic dicarboxylic acid are preferable. An aromatic dicarboxylic acid alone is especially preferable. Among the aromatic dicarboxylic acids, those which have 8 to 16 carbon atoms, especially benzenedicarboxylic acids such as phthalic acid, terephthalic acid and isophthalic acid and dimethyl esters thereof are more preferable. Dimethyl terephthalate is most preferable.

Where a mixture of dicarboxylic acids or esters thereof is used, preferably the same dicarboxylic acid occupies at least about 60% by mole, more preferably at least about 80% by mole, of the total amount of the dicarboxylic acids. An optimum mixture comprises at least about 60% by mole of dimethyl terephthalate based on the dicarboxylic acid mixture.

The long chain ether glycol (iii) used for the production of the thermoplastic copolyetherester elastomer and their polylactone- or lactone-modified products is preferably selected from a poly(oxyalkylene) glycol and a copoly(oxyalkylene) glycol, which have a molecular weight of about 400 to about 12,000. Preferable poly(oxyalkylene) units are derived from long chain ether glycols which have a molecular weight of about 900 to about 4,000, and the main chain of which has a carbon/oxygen ratio of about 1.8 to about 4.3.

As typical examples of the poly(oxyalkylene) glycols and the copoly(oxyalkylene) glycols, there can be mentioned poly(ethylene-ether) glycol, poly(propylene-ether) glycol, poly(tetramethylene-ether) glycol, poly(propylene-ether) glycol which is end-capped with ethylene oxide, a random or block copolymer of ethylene oxide and propylene oxide such as a copoly(propylene-ether-ethylene-ether) glycol comprising a predominant amount of the poly(ethylene-ether) backbone, and a random or block copolymer of tetrahydrofuran and a minor amount of a comonomer such as ethylene oxide, propylene oxide or methyltetrahydrofuran (the amount of the comonomer is such that the carbon/oxygen ratio does not exceed about 4.3). A polyformal glycol produced by the reaction of formaldehyde with a diol such as 1,4-butanediol or 1,5-pentanediol is also useful. Preferable poly(oxyalkylene) glycols or copoly(oxyalkylene) glycols are poly(propylene-ether) glycol, poly(tetramethylene-ether) glycol, and a copoly(propylene-etherethylene-ether) glycol comprising a predominant amount of poly(ethylene-ether) backbone.

If desired, one or more lactones or polylactones (iv) can be used for the production of the copolyetherester elastomers. The polylactone-modified or lactone-modified copolyetherester elastomers are described in U.S. Patent No. 4,569,973.

As the lactone (iv) used in the invention, ε-caprolactone is especially preferable, but substituted lactones having a lower alkyl substituent such as a methyl group or an ethyl group in the α, β, γ, δ or ε position can be used. Further, as block units of the copolyetherester elastomers used in the invention, a polylactone can be used which includes a homopolymer of a lactone, a copolymer of a lactone with other copolymerizable monomer, and a hydroxyl-terminated polylactone.

In general, preferable copolyesterether elastomers and polylactone-modified or lactone-modified products comprise about 5% to about 80% by weight, more preferably about 10% to about 50% by weight, of the long chain ether glycol (iii) or the long chain ether glycol (iii) plus the lactone (iv).

The polyetherimideester elastomer used in the invention can be produced from one or more kinds of diols, one or more kinds of dicarboxylic acids and one or more kinds of high-molecular weight polyoxyalkylenediimide diacids. The production of the polyoxyalkylenediimide diacid is described in U.S. Patent No. 4,556,705.

The polyetherimideester elastomer used in the invention can be produced by a conventional process for producing polyesters, for example, an esterification and condensation process for producing a random or block copolymer. Thus, the polyetherimideester elastomer is characterized as a reaction product of a diol with an acid.

Preferable polyetherimideester elastomers used in the invention can be produced from (i) one or more kinds of aliphatic or alicyclic diols having 2 to 15 carbon atoms, (ii) one or more kinds of aliphatic, alicyclic or aromatic dicarboxylic acids or ester derivatives thereof, and (iii) one or more kinds of polyoxyalkylenediimide diacids. The amount of the polyoxyalkylenediimide diacid used may be varied depending upon the desired properties of the resulting polyetherimideester elastomer. In general, the weight ratio of the polyoxyalkylenediimide diacid (iii), the dicarboxylic acid (ii) is in the range of about 0.25 to about 2.0, preferably about 0.4 to about 1.4.

The diol (i) used for the production of the polyetherimideester includes saturated and unsaturated aliphatic and alicyclic dihydroxy compounds and aromatic dihydroxy compounds. The diol (i) preferably has a low molecular weight, i.e., a molecular weight of about 250 or lower.

A preferable diol is selected from saturated aliphatic diols and their mixtures, and mixtures of one or more kinds of saturated aliphatic diols and one or more kinds of unsaturated aliphatic diols (each of the diols has 2 to 8 carbon atoms). In the case where two or more kinds of diols are used, preferably the same diol occupies at least about 60% by mole, more preferably at least 80% by mole, based on the total of the diols. More preferable diols are 1,4-butanediol and a mixture predominantly comprised of 1,4-butanediol. Of these, 1,4-butanediol alone is the most preferable.

The dicarboxylic acid (ii) used for the production of the polyetherimideester is selected from aliphatic, alicyclic and aromatic dicarboxylic acids and ester derivatives thereof. Preferable dicarboxylic acids have a molecular weight of lower than about 300 or have 4 to 18 carbon atoms. But, dicarboxylic acids having a higher molecular weight, especially dimer acids, can also be used.

Among the aliphatic, alicyclic and aromatic dicarboxylic acids used for the production of the polyetherimideester, aromatic dicarboxylic acids, a mixture of two or more aromatic dicarboxylic acids and a mixture of an aromatic dicarboxylic acid and an aliphatic and, or alicyclic dicarboxylic acid are preferable. Of these, an aromatic dicarboxylic acid alone is more preferable. Among the aromatic dicarboxylic acids, those which have 8 to 16 carbon atoms, especially benzenedicarboxylic acids such as phthalic acid, terephthalic acid and isophthalic acid, and dimethyl esters thereof are more preferable. Dimethyl terephthalate is most preferable.

The polyoxyalkylenediimide diacid (iii) used for the production of the polyetherimideester is a diacid having an average molecular weight larger than about 700, preferably larger than about 900. The diacid (iii) can be produced by imidating one or more kinds of tricarboxylic acid compounds with a high-molecular-weight polyoxyalkylene diamine, which tricarboxylic acids have two adjacent carboxyl groups or an acid anhydride group and another carboxyl group which is capable of being esterified and is preferably incapable of being imidated.

In general, the polyoxyalkylenediimide diacid useful for the production of the polyetherimideester is represented by the following formula: 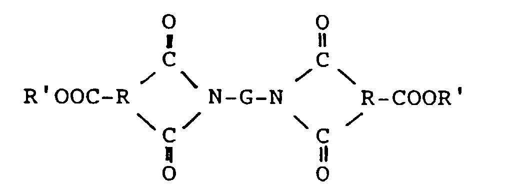 wherein Rs may be the same or different and represent a trivalent organic radical, preferably an aliphatic, alicyclic or aromatic trivalent radical having 2 to 20 carbon atoms, R's may be the same or different and represent hydrogen or a univalent organic radical, preferably an aliphatic or alicyclic univalent radical having 1 to 8 carbon atoms or an aromatic univalent radical having 6 to 12 carbon atoms, for example, a phenyl group. Hydrogen is most preferable as R'. G is a residue which is obtainable by removing hydroxyl groups from both end positions or positions in close vicinity to both ends of a long chain ether glycol having an average molecular weight of about 600 to about 12,000, preferably of about 900 to about 4,000 and a carbon, oxygen ratio of about 1.8 to about 4.3.

The polyoxyalkylene diamine used for the production of the polyoxyalkylenediimide diacid is produced from a long chain ether glycol. As typical examples of the long chain ether glycol, there can be mentioned poly(ethylene-ether) glycol, poly(propylene-ether) glycol, poly(tetramethyleneether) glycol, random and block copolymers of ethylene oxide and propylene oxide, e.g., propylene oxide-terminated poly(ethylene-ether) glycol; and random and block copolymers of tetrahydrofuran (the amount of tetrahydrofuran is such that the carbon, oxygen molar ratio in the glycol does not exceed about 4.3) and a small amount of a comonomer such as methyltetrahydrofuran. Preferable poly(alkylene-ether) glycols are poly(propylene-ether) glycol, poly(propylene-ether) glycol and propylene oxide-terminated poly(ethylene-ether) glycol.

In general, preferable polyoxyalkylenediamines have an average molecular weight of about 500 to about 12,000, more preferably of about 900 to about 4,000.

The tricarboxylic acid compounds used for the production of the polyoxyalkylenediimide diacid can be a corresponding acid which contains a carboxylic acid anhydride group or two adjacent imide-forming carboxyl groups instead of the carboxylic acid anhydride group, and an additional carboxyl group. These acids may be used either alone or as a mixture. The additional carboxyl group must be capable of being esterified and is preferably substantially incapable of being imidated.

The tricarboxylic acids can be represented by the following formula: 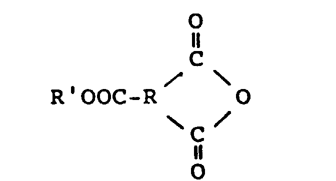 wherein Rs may be the same or different and are trivalent organic radicals, preferably aliphatic, alicyclic or aromatic trivalent organic radicals having 2 to 20 carbon atoms, R's may be the same or different and are hydrogen or univalent organic radicals, preferably aliphatic or alicyclic univalent organic radical having 1 to 8 carbon atoms or aromatic univalent organic radical having 6 to 12 carbon atoms, e.g., phenyl. Hydrogen is most preferable as R'. The most preferable tricarboxylic acid compound is trimellitic anhydride.

The amounts of the components used for the production of the polyetherimideester are not particularly limited, but preferably the amount of diol (i) is at least equimolar to more preferably larger than the equimolar amount to, and most preferably at least 150% of the total mole number of dicarboxylic acid (ii) and polyoxyalkylenediimide diacid (iii). By using such an excessive amount of diol (i) to the sum of the acid components (ii) and (iii), the loss of diol (i) occurring during esterification and condensation is compensated, and the polyetherimideester is obtained in a highest yield.

The proportion of dicarboxylic acid (ii) to polyoxyalkylenediimide diacid (iii) also is not particularly limited, but preferably the (ii)/(iii) proportion is in the range of about 0.25 to about 2, more preferably about 0.4 to about 1.4. The optimum (ii)/(iii) proportion varies depending upon the particular polyoxyalkylenediimide diacid used and the desired physical and chemical properties of the polyetherimideester produced. In general, the lower the weight ratio of polyoxyalkylenediimide diacid (iii)/dicarboxylic acid (ii), the higher the strength, crystallinity and resistance to deflection under heat of the resulting polymer. In contrast, the higher the weight ratio of (iii)/(ii), the higher the flexibility, tension set and low-temperature impact resistance of the resulting polymer.

Preferable polyetherimideesters used in the invention are a reaction product of (i) 1,4-butanediol which may optionally contain up to 40% by mole of other saturated or unsaturated aliphatic or alicyclic diol, (ii) dimethyl terephthalate which may optionally contain up to 40% by mole of other dicarboxylic acid compound, and (iii) a polyoxyalkylenediimide diacid prepared from a polyoxyalkylenediamine having a molecular weight of about 600 to about 12,000, preferably of about 900 to about 4,000 and trimellitic anhydride. The most preferable polyetherimide-ester is a reaction product of (i) 1,4-butanediol alone as the diol, (ii) dimethyl terephthalate alone as the dicarboxylic acid, and (iii) the above-mentioned polyoxyalkylenediimide diacid.

The thermoplastic copolyamide elastomers used in the first composition of the invention are classified into a copolyesteramide elastomer which is a random or multi-block copolymer comprised of polyester recurring units and polyamide recurring units, and a copolyetheresteramide elastomer which is a random or multiblock copolymer comprised of polyetherester recurring units and polyamide recurring units. In the second composition of the invention, a copolyesteramide elastomer is used as the thermoplastic copolyamide elastomer.

The copolyesteramide elastomer used in the invention is obtained by reacting (1) at least one polyamide-forming compound selected from (a) an amino carboxylic acid having 6 to 12 carbon atoms, (b) a lactam having 6 to 12 carbon atoms, and (c) a nylon salt prepared from a dicarboxylic acid having 4 to 12 carbon atoms and a diamine having 4 to 12 carbon atoms, (2) a dicarboxylic acid having 4 to 54 carbon atoms, and (3) a polycaprolactone-polyol.

As the aminocarboxylic acid having 6 to 12 carbon atoms, there can be mentioned 6-amino-caproic acid, 7-amino-caprylic acid, 8-amino-capric acid, ω-aminoenanthic acid, ω-amino-pelargonic acid, 11-amino-undecanoic acid and 12-aminododecanoic acid. Of these, 6-amino-caproic acid, 11-aminoundecanoic acid and 12-amino-dodecanoic acid are preferable. As the lactam having 6 to 12 carbon atoms, there can be mentioned caprolactam, enantolactam, caprylic lactam and lauryl lactam. Of these, caprolactam and lauryl lactam are preferable.

As the nylon salt prepared from a dicarboxylic acid having 4 to 12 carbon atoms and a diamine having 4 to 12 carbon atoms, there can be mentioned a salt of adipic acid with hexamethylenediamine, a salt of sebacic acid with hexamethylenediamine, a salt of isophthalic acid with hexamethylenediamine and a salt of terephthalic acid with trimethylhexamethylenediamine.

As the dicarboxylic acid having 4 to 54 carbon atoms, there can be mentioned aromatic dicarboxylic acids such as phthalic acid, isophthalic acid, terephthalic acid, naphthalene-2,6-dicarboxylic acid, naphthalene-2,7-dicarboxylic acid, diphenyl-4,4'-dicarboxylic acid and diphenoxyethane-dicarboxylic acid; alicyclic dicarboxylic acids such as 1,4-cyclohexane-dicarboxylic acid, 1,2-cyclohexanedicarboxylic acid and dicyclohexyl-4,4'-dicarboxylic acid; aliphatic dicarboxylic acids such as succinic acid, oxalic acid, adipic acid, sebacic acid and dodecanoic acid; and dimer acids of these acids. Of these, terephthalic acid, isophthalic acid, 1,4-cyclohexanedicarboxylic acid, adipic acid, sebacic acid, dodecanoic acid, and their dimer acids are preferable.

The polycaprolactone-polyol used together with the polyamide-forming compound and the dicarboxylic acid for the production of the copolyesteramide elastomer preferably has an average molecular weight of 200 to 10,000. If the molecular weight of the polycaprolactone-polyol is larger than 10,000, a problem arises due to the inherent properties of the polycaprolactone-polyol. One preferable example of the polycaprolactone-polyol is a mixture of 70 to 99.9% by weight of polycaprolactone-diol having an average molecular weight of 200 to 10,000 and 0.1 to 30% by weight of polycaprolactonepolyol with at least three functional groups having an average molecular weight of 200 to 10,000. If the proportion of the polycaprolactone-polyol with at least three functional groups is smaller than 0.1% by weight, the beneficial results of this compound are not obtained. In contrast, if the proportion of this compound exceeds 30% by weight, the reaction mixture is liable to be gelled during production.

The above-mentioned copolyesteramide elastomer is produced by the reaction of an initiator, ε-caprolactone or 6-hydroxycaproic acid, a polyamide-forming compound and a dicarboxylic acid. The producing process includes the following processes (A) through (D).
(A) ε-caprolactone is ring-opened and added to an initiator to give a polycaprolactone-diol, and the polycaprolactone-diol, a polyamide-forming compound and a dicarboxylic acid are subjected to a polycondensation reaction.
(B) A polyamide-forming compound is reacted with a dicarboxylic acid to give a dicarboxylic acid polyamide, and the dicarboxylic acid polyamide and the polycaprolactonediol prepared in the process (A) are subjected to a polycondensation.
(C) The dicarboxylic acid polyamide prepared in the process (B), an initiator and ε-caprolactone are subjected to a ring-opening polycondensation.
(D) An initiator, ε-caprolactone, a polyamide-forming compound and a dicarboxylic acid are subjected to a ring-opening polycondensation.

Instead of the polycaprolactone-diol, a polycaprolactonepolyol may be used.

As the initiator, there can be mentioned, for example, diols represented by the following formula:

HO-R-OH

wherein R is an aromatic hydrocarbon group having 1 or 2 aromatic rings, an alicyclic hydrocarbon group having 4 to 37 carbon atoms, a saturated or unsaturated aliphatic group having 1 to 30 carbon atoms, a polyester-polyol residue having an average molecular weight of 200 to 6,000 or a polyalkylene glycol residue having an average molecular weight of 200 to 6,000.

The copolyetheresteramide elastomer used in the first composition of the invention is synthesized by a condensation reaction between a polyether having hydroxyl groups at the ends of the main chain and a polyamide. As such polyethers having hydroxyl terminal groups, there can be mentioned linear or branched polyoxyalkylene glycols, e.g., polyoxyethylene glycol, polyoxypropylene glycol, polyoxytetramethylene glycol or a mixture thereof, and copolyethers derived from these compounds. The polyethers generally have an average molecular weight of 200 to 6,000, preferably 400 to 3,000. The amount of polyoxyalkylene glycol is usually in the range of 5 to 85% by weight, preferably 10 to 50% by weight, based on the total weight of the copolyetheresteramide elastomer.

As the polyamide used for the synthesis of the copolyetheresteramide elastomer, there can be mentioned those which are made from a lactam or amino acid with a hydrocarbon chain having 4 to 14 carbon atoms, for example, caprolactam, enantholactam, dodecalactam, undecanolactam, dodecanolactam, 11-amino-undecanoic acid or 12-aminododecanoic acid, or a condensation product of a dicarboxylic acid with a diamine, for example, nylon 6-6, 6-9, 6-10, 6-12 or 9-6, namely, a condensation product of adipic acid, azelaic acid, sebacic acid or 1,12-dodecane-diacid with hexamethylenediamine or a condensation product of adipic acid with nonamethylenediamine.

A diacid used as a chain stopper in the synthesis of a polyamide enables the formation of a polyamide having carboxyl groups at the terminals. As the diacid, there can be mentioned dicarboxylic acids such as aliphatic dicarboxylic acids having 4 to 20 carbon atoms, for example, succinic acid, adipic acid, suberic acid, azelaic acid, sebacic acid, undecane-diacid and dodecane-diacid. Alicyclic or aromatic diacids also can be used.

These diacids are used in an amount exceeding the amount which is calculated according to the conventional procedure used in the current polycondensation reaction as the amount required for obtaining a polyamide having a desired average molecular weight. The dicarboxylic acid polyamides usually have an average molecular weight of 300 to 15,000, preferably 800 to 5,000.

The polycondensation reaction for the production of the copolyetheresteramide elastomer is carried out in the presence of a catalyst under a reduced pressure of about 0.05 to 5 mmHg at a temperature higher than the melting points of the reaction components used while the reaction components are stirred. The reaction temperature is selected so that the reaction components are maintained in a fluid state. The reaction temperature is usually 100 to 400°C, preferably 200 to 300°C.

The reaction time varies depending upon the particular polyoxyalkylene glycol and is usually in the range from 10 minutes to 10 hours, preferably from 1 to 7 hours. The reaction time should be long enough for obtaining a product with a viscosity giving the desired properties required for a moldable and/or extrudable plastic material.

The carboxylic acid groups and the hydroxyl groups in the reaction components must be substantially equimolar to each other so that the polycondensation reaction occurs in optimum conditions to give the desired product.

The epoxy group-containing methacrylate or acrylate copolymer rubber used in the invention is a methacrylate or acrylate copolymer rubber prepared by copolymerizing (1) an alkyl ester of methacrylic acid or acrylic acid and/or an alkoxy-substituted alkyl ester of methacrylic acid or acrylic acid, (2) an epoxy group-containing monomer, and if desired (3) other ethylenically unsaturated monomers copolymerizable with these monomers (1) and (2).

Alkyl esters of methacrylic acid and acrylic acid (1) used for the production of the epoxy group-containing methacrylate or acrylate copolymer rubber are represented by the following formula: 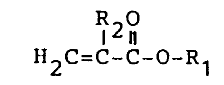 wherein R₁ is an alkyl group having 1 to 18 carbon atoms and R₂ is hydrogen or a methyl group. As specific examples of the alkyl methacrylate and alkyl acrylate, there can be mentioned methyl methacrylate, methyl acrylate, ethyl methacrylate, ethyl acrylate, n-propyl methacrylate, n-propyl acrylate, n-butyl methacrylate, n-butyl acrylate, isobutyl methacrylate, isobutyl acrylate, n-pentyl methacrylate, n-pentyl acrylate, isoamyl methacrylate, isoamyl acrylate, n-hexyl methacrylate, n-hexyl acrylate, 2-methylpentyl methacrylate, 2-methylpentyl acrylate, n-octyl methacrylate, n-octyl acrylate, 2-ethylhexyl methacrylate, 2-ethylhexyl acrylate, n-decyl methacrylate, n-decyl acrylate, n-dodecyl methacrylate, n-dodecyl acrylate, n-octadecyl methacrylate and n-octadecyl methacrylate. Of these, ethyl methacrylate, ethyl acrylate, n-propyl methacrylate, n-propyl acrylate, n-butyl methacrylate, n-butyl acrylate, n-pentyl methacrylate, n-pentyl acrylate, n-hexyl methacrylate, n-hexyl acrylate, 2-ethylhexyl methacrylate, 2-ethylhexyl acrylate, n-octyl methacrylate and n-octyl acrylate are preferable.

Alkoxy-substituted alkyl esters of methacrylic acid and acrylic acid are represented by the following formula: 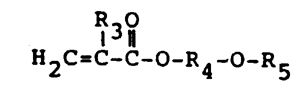 wherein R₃ is hydrogen or a methyl group, R₄ is an alkylene group having 1 to 18 carbon atoms and R₅ is an alkyl group having 1 to 18 carbon atoms. As specific examples of the alkoxy-substituted alkyl esters of methacrylic acid and acrylic acid, there can be mentioned 2-methoxyethyl methacrylate, 2-methoxyethyl acrylate, 2-ethoxyethyl methacrylate, 2-ethoxyethyl acrylate, 2-(n-propoxy)ethyl methacrylate, 2-(n-propoxy)ethyl acrylate, 2-(n-butoxy)ethyl methacrylate, 2-(n-butoxy)ethyl acrylate, 3-methoxypropyl methacrylate, 3-methoxypropyl acrylate, 3-ethoxypropyl methacrylate, 3-ethoxypropyl acrylate, 2-(n-propoxy)propyl methacrylate, 2-(n-propoxy)propyl acrylate, 2-(n-butoxy)-propyl methacrylate and 2-(n-butoxy)propyl acrylate.

As specific examples of the epoxy group-containing monomer used for the production of the epoxy group-containing methacrylate or acrylate copolymer rubber, there can be mentioned allyl glycidyl ether, glycidyl methacrylate, glycidyl acrylate, and compounds represented by the following formulas (in each formula, R₆ represents hydrogen or a methyl group).

3,4-Epoxyhexahydrobenzyl methacrylate or 3,4-epoxyhexahydrobenzyl acrylate

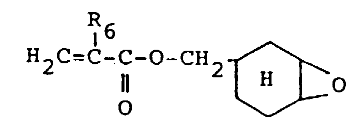

4-Glycidyloxy-3,5-dimethylbenzyl methacrylate or 4-glycidyloxy-3,5-dimethylbenzyl acrylate

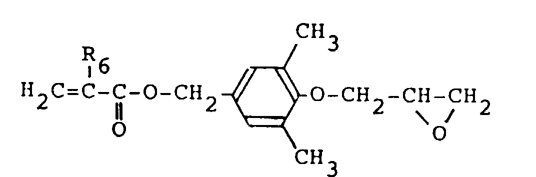

2-(4'-Glycidyloxyphenyl)-2-[4'-methacryloxyethyloxyphenyl]propane or 2-(4'-glycidyloxyphenyl)-2-[4'-acryloxyethyloxyphenyl]propane

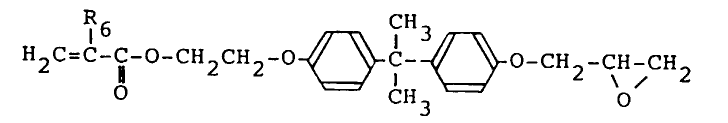

Glycidyl 2-methacryloyloxyethylsuccinate or glycidyl 2-acryloyloxyethylsuccinate

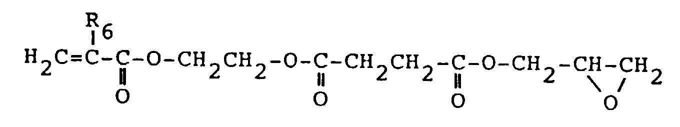

Glycidyl 2-methacryloyloxyethylphthalate or glycidyl 2-acryloyloxyethylphthalate

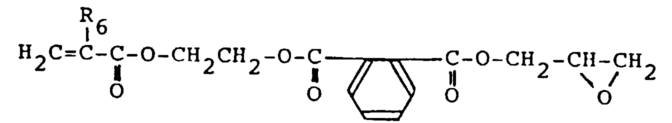

Glycidyl 2-methacryloyloxyethylhexahydrophthalate or glycidyl 2-acryloyloxyethylhexahydrophthalate

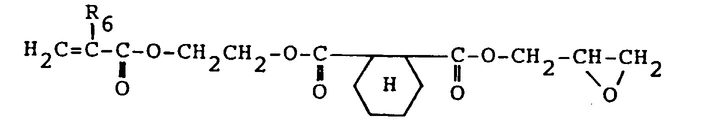

Glycidyl 2-methacryloyloxyethylterephthalate or glycidyl 2-acryloyloxyethylterephthalate

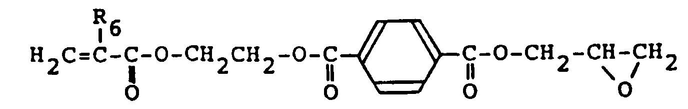

Glycidyl 2-methacryloyloxyethylhexahydroterephthalate or glycidyl 2-acryloyloxyethylhexahydroterephthalate

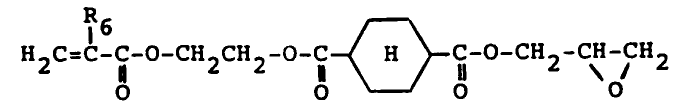

3,4-Epoxyhexahydrobenzylmethacrylamide or 3,4-epoxyhexahydrobenzylacrylamide

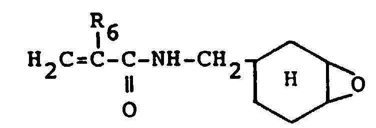

4-Glycidyloxy-3,5-dimethylbenzylmethacrylamide or 4-glycidyloxy-3,5-dimethylbenzylacrylamide

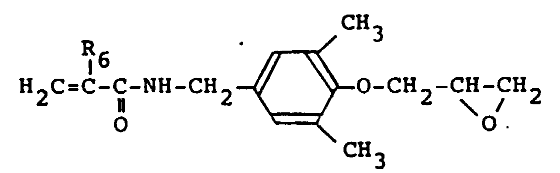

As the monomers which are copolymerized, if desired, with (1) the alkyl methacrylate or acrylate or alkoxy-substituted alkyl methacrylate or acrylate and (2) the epoxy group-containing monomer, there can be mentioned cyano-substituted alkyl methacrylates or acrylates such as 2-cyanoethyl methacrylate, 2-cyanoethyl acrylate, 2-cyanopropyl methacrylate, 2-cyanopropyl acrylate, 4-cyanobutyl methacrylate and 4-cyanobutyl acrylate; amino-substituted alkyl methacrylates or acrylates such as diethylamincethyl methacrylate and diethylaminoethyl acrylate; fluorine-containing methacrylates or acrylates such as 1,1,1-trifluoroethyl methacrylate and 1,1,1-trifluoroethyl acrylate; hydroxyl-substituted alkyl methacrylates or acrylates such as hydroxyethyl methacrylate and hydroxyethyl acrylate; alkyl vinyl ketones such as methyl vinyl ketone; vinyl or allyl ethers such as vinyl ethyl ether and allyl methyl ether; vinyl aromatic compounds such as styrene, α-methylstyrene, chlorostyrene and vinyltoluene; vinyl nitriles such as acrylonitrile and methacrylonitrile; vinyl amides such as acrylamide, methacrylamide and N-methylolacrylamide; and ethylene, propylene and vinyl acetate.

The amounts of (1) an alkyl methacrylate or acrylate, or an alkoxy-substituted alkyl methacrylate or acrylate, (2) an epoxy group-containing monomer, and (3) an optional other ethylenically unsaturated monomer are not particularly limited, but preferably the amounts of (1), (2) and (3) are 35 to 99% by weight, 1 to 15% by weight and 0 to 50% by weight, respectively, and more preferably 55 to 97% by weight, 3 to 15% by weight and 0 to 30% by weight, respectively. If the amount of the alkyl methacrylate or acrylate or alkoxy-substituted alkyl methacrylate or acrylate exceeds the above range, the crosslinking effect is lowered. In contrast, if the amount of the epoxy group-containing monomer exceeds the above-range, the rubber elasticity is drastically reduced.

Optimum epoxy group-containing methacrylate or acrylate copolymer rubbers contain at least 3% by weight of units derived from glycidyl methacrylate or glycidyl acrylate as the epoxy groups.

The epoxy group-containing methacrylate or acrylate copolymer rubber in the second composition of the invention is crosslinked with (a) a compound having at least two carboxyl groups or at least one carboxylic anhydride group in the molecule under kneaded conditions and dispersed in the composition. The epoxy group-containing methacrylate or acrylate copolymer rubber in the first composition of the invention is crosslinked with at least one crosslinking agent selected from (b) a combination of said compound (a) with an imidazole compound, and (c) a combination of an isocyanuric acid compound with an imidazole compound, under kneading conditions and dispersed in the composition.

The above-mentioned components (a), (b) and (c), which are used as a crosslinking agent in the invention, are usually not used as a crosslinking agent for an epoxy group-containing acrylic rubber. This is because the rate of the crosslinking reaction between the component (a), (b) or (c) and epoxy groups of the acrylic rubber is very slow at a temperature range of 150 to 180°C in which rubbers are usually cured, and thus, the components (a), (b) and (c) are not suitable for an ordinary molding cycle of rubbers. In the composition of the invention, a crosslinking reaction rapidly occurs and is completed under shearing conditions at a temperature at which the composition of the invention is usually prepared and which is 200°C or higher. Further, the crosslinking agents used in the invention are characterized in that a copolyester elastomer and a copolyamide elastomer are influenced by the crosslinking agents only to a negligible extent, which is in a striking contrast to conventional crosslinking agents used for ordinary acrylic rubbers. Thus, the physical properties of the composition of the invention are subject to change only to a minor extent during the preparation of the composition and the molding thereof, which leads to enhancement of durability of the resulting molded article.

The compound having at least two carboxyl groups or at least one carboxylic anhydride group in the molecule, which is used as the crosslinking agent for the epoxy group-containing methacrylate or acrylate copolymer rubber, either alone or in combination with an imidazole compound, is preferably selected from aliphatic, alicyclic and aromatic polycarboxylic acids, partial or complete carboxylic anhydrides thereof, and partial or complete esters of these polycarboxylic acids or carboxylic anhydrides with a polyalkylene glycol or an alkylene glycol. The polycarboxylic acids and the carboxylic anhydrides preferably have a molecular weight of not larger than 5,000.

As specific examples of the aliphatic polycarboxylic acids, there can be mentioned succinic acid, glutaric acid, pimelic acid, azelaic acid, sebacic acid, dodecanedicarboxylic acid, octadecanedicarboxylic acid, dodecenylsuccinic acid and butanetetracarboxylic acid. As specific examples of the alicyclic polycarboxylic acids, there can be mentioned cyclopentanedicarboxylic acid, cyclopentanetricarboxylic acid, cyclopentanetetracarboxylic acid, cyclohexanedicarboxylic acid, cyclohexanetricarboxylic acid, methylcyclohexanedicarboxylic acid, tetrahydrophthalic acid, endomethylenetetrahydrophthalic acid and methylendomethylenetetrahydrophthalic acid. As specific examples of the aromatic polycarboxylic acids, there can be mentioned phthalic acid, isophthalic acid, terephthalic acid, trimellitic acid, trimesic acid and pyromellitic acid. As specific examples of the carboxylic anhydrides, there can be mentioned partial and complete anhydrides of these polycarboxylic acids.

The component (b) used as a crosslinking agent in the invention is preferably a composite salt of the compound having at least two carboxyl groups or at least one carboxylic anhydride group in the molecule with an imidazole compound. The component (c) also used as a crosslinking agent in the invention is preferably a composite salt of an isocyanuric acid compound with an imidazole compound.

The isocyanuric acid compound includes isocyanuric acid and derivatives of isocyanuric acid such as N-ethylisocyanuric acid and 2-carboxyethylisocyanuric acid.

The imidazole compound includes imidazole and derivatives of imidazole such as 2-methylimidazole, 2-undecylimidazole, 2-heptadecylimidazole, 2-phenylimidazole and 1-cyanoethyl-2-methylimidazole.

As specific examples of the composite salt of the compound having at least two carboxyl groups or at least one carboxylic anhydride group in the molecule with the imidazole compound, and the composite salt of the isocyanuric acid compound with the imidazole compound, there can be mentioned an isocyanuric acid/2-methylimidazole composite salt, a trimellitic acid/2-methylimidazole composite salt, a trimellitic acid/2-methylimidazole composite salt, a trimellitic anhydride/2-methylimidazole composite salt, a dodecanedicarboxylic acid/2-methylimidazole composite salt and an octadecanedidarboxylic acid/2-methylimidazole composite salt.

The ratio of the compound having at least two carboxylic groups or at least one carboxylic anhydride group in the molecule to the imidazole compound in the crosslinking agent (b) and the ratio of the isocyanuric acid compound to the imdazole compound in the crosslinking agent (c) are preferably such that the amount of the imidazole compound is in the range of 0.2 to 2 moles per mole of a carboxyl group in the carboxyl group- or carboxyl anhydride group-containing compound or per mole of an acid group in the isocyanuric acid compound. If the amount of the imidazole compound is larger than this range, the copolyester is deteriorated.

The amount of the crosslinking agent in the composition of the invention is preferably such that the carboxyl group (a carboxylic anhydride group is equivalent to two carboxyl groups) or the acid group in the isocyanuric acid compound is in the range of 0.05 to 5 moles per mole of the epoxy group in the epoxy group-containing methacrylate or acrylate copolymer. More preferably, the carboxyl group or the isocyanuric acid group is in the range of 0.1 to 1.5 moles per mole of the epoxy group. If the ratio of the crosslinking agent to the epoxy group is lower than the above range, the methacrylate or acrylate copolymer rubber has a low crosslink density and the stress and the compression set are not enhanced. In contrast, if the ratio of the cross-linking agent to the epoxy group is larger than the above range, the crosslink density also is low and the stress and the compression set are not enhanced.

The thermoplastic elastomer composition of the invention is prepared by kneading the thermoplastic copolyester elastomer or the thermoplastic copolyamide elastomer and the epoxy group-containing methacrylate or acrylate copolymer rubber at a temperature higher than the softening point or the melting point, and crosslinking the epoxy group-containing methacrylate or acrylate copolymer rubber with the above-mentioned crosslinking agent under kneading conditions and dispersing the copolymer rubber in the composition. When the cross linking agent is added, the mixture should be heated to a temperature sufficiently high for crosslinking the epoxy group-containing methacrylate or acrylate copolymer rubber. The kneading is generally carried out at a temperature of 100 to 280°C, preferably 140 to 250°C, for about 1 to 30 minutes.

The composition of the invention may have incorporated therein various additives. The additives include, for example, a filler, a reinforcer, a single fiber, a pigment, a plasticizer, an antiaging agent, a processing aid and others.

The crosslinking agent and additives may be added preliminarily to the copolyester elastomer or the copolyamide elastomer, or the epoxy group-containing methacrylate or acrylate copolymer rubber, or added under kneading conditions to these components, or added to the prepared elastomer composition. The crosslinking agent is preferably added under kneading to the polymers. The kneading is preferably carried out under high shearing conditions. As the kneading apparatus used, there can be mentioned, for example, a single screw extruder, a twin-screw extruder, a Buss-co-kneader, a Banbury mixer, a Farrell continuous mixer and a KCK mixer.

The respective components can be added to the kneading apparatus after the components are mixed together, or weighed separately and added simultaneously. A part of or the entire polymers can be added dividedly or sequentially. In a preferred embodiment, the thermoplastic copolyester or copolyamide elastomer and the epoxy group-containing methacrylate or acrylate copolymer rubber are first dispersed to some extent and then the crosslinking agent is added. In this embodiment, a graft reaction between the thermoplastic copolyester or copolyamide elastomer and the methacrylate or acrylate copolymer rubber is liable to occur prior to the crosslinking reaction of the methacrylate or acrylate copolymer rubber with the crosslinking agent.

In the thermoplastic elastomer composition of the invention, the epoxy group-containing methacrylate or acrylate copolymer rubber is crosslinked with the crosslinking agent and is dispersed without deterioration of the thermoplastic copolyester elastomer or the thermoplastic copolyamide (or copolyesteramide) elastomer and of the resulting elastomer composition, when the thermoplastic copolyester or copolyamide (or copolyesteramide) elastomer and the methacrylate or acrylate copolymer rubber are kneaded together. Therefore, the thermoplastic elastomer composition exhibits a high modulus, a good flexibility, a good heat aging resistance and a good permanent set resistance. This is in a striking contrast to a conventional elastomer composition comprising a thermoplastic copolyester elastomer and an uncured acrylic rubber and a conventional elastomer composition comprising a thermoplastic copolyester elastomer or a thermoplastic copolyamide elastomer and cured by using a conventional curing agent for an acrylic rubber, wherein the thermoplastic copolyester or copolyamide elastomer is readily deteriorated.

Especially, when an epoxy group-containing methacrylate or acrylate copolymer rubber containing at least 3% by weight of glycidyl methacrylate or glycidyl acrylate units as the epoxy group is used, the resulting thermoplastic elastomer composition exhibits a very high modulus and excellent flexibility, heat aging resistance and permanent set resistance.

The thermoplastic elastomer composition of the invention will now be specifically described by the following examples.

In the examples, the test of materials was conducted according to Japanese Industrial Standard (JIS) K-6301.

### Copolyester Elastomers

COPE 1: Copolyetherimideester elastomer, "Lomod XB 125" supplied by General Electric Co.
COPE 2: Copolyetherester elastomer, "Hytrel 5557" supplied by Du Pont
COPE 3: Polylactone-modified copolyetherester elastomer, "Perprene S2001" supplied by Toyo Spinning Co.

### Copolyamide Elastomers

COPA 1: Copolyetheresteramide elastomer, "Pebax 5533SA00" supplied by Atochem Co.

### Epoxy Group-Containing Methacrylate or Acrylate Copolymer Rubber

ACM 1: Ethyl acrylate (EA)/glycidyl methacrylate (GMA) copolymer rubber; GMA content = 2.4 parts per hundred parts of rubber (phr), prepared by emulsion polymerization
ACM 2: EA/GMA copolymer rubber; GMA content = 5.0 phr, prepared by emulsion polymerization
ACM 3: EA/GMA copolymer rubber; GMA content = 7.9 phr, prepared by emulsion polymerization
ACM 4: EA/GMA copolymer rubber; GMA content = 10.5 phr, prepared by emulsion polymerization
ACM 5: "Hytemp 4051", supplied by Zeon Chemical, USA, which contains an active halogen group as a crosslinking site

### Crosslinking Agents

Crosslinker 1: Butanetetracarboxylic acid supplied by Mitsui-Toatsu Fine K.K.
Crosslinker 2: "SL-20" (mainly comprised of octadecamethylenedicarboxylic acid) supplied by Okamura Seiyu K.K.
Crosslinker 3: Adipic acid
Crosslinker 4: Diester of trimellitic anhydride with ethylene glycol, "TMEG" supplied by Shin-Nippon Rika K.K.
Crosslinker 5: Composite salt of isocyanuric acid with 2-methylimidazole, "Curesol 2MZ-OK", supplied by Shikoku Kasei K.K.
Crosslinker 6: Composite salt of equimolar amounts of "SB-20" (mainly comprised of 7-ethylhexadecamethylenedicarboxylic acid, supplied by Okamura Seiyu K.K.) with 2-methylimidazole; made by Nippon Zeon Co.
. Crosslinker 7: Composite salt of equimolar amounts of "SL-20" (mainly comprised of octadecamethylenedicarboxylic acid, supplied by Okamura Seiyu K.K.) with 2-methylimidazole; made by Nippon Zeon Co.
Crosslinker 8: 2-Methylimidazole, supplied by Shikoku Kasei K.K.
Crosslinker 9: Ammonium benzoate, "Vulnoc" supplied by Oh-uchi Shinko k.k.
Crosslinker 10: Sodium stearate

### Examples 1 to 4

A 50/50 by weight mixture of COPE 1 with a rubber selected from ACM 1 through 4 was kneaded by a twin-screw extruder having a diameter of 36 mm, an L/D of 48 and three probes, and crosslinker 1 was added to a position corresponding to an L/D of 30 whereby ACM was crosslinked under kneading conditions. The amount of extrusion was 10 kg/hour, the number of screw revolution was 250 rpm and the polymer temperature within the extruding die was 260°C ± 10°C. The thus-obtained pellet was dried and then press-molded into a sheet having a thickness of 1 mm. The properties of the sheet was evaluated. The results are shown in Table 1. (In Tables 1 to 9, the composition of materials is expressed by parts by weight)

### Comparative Examples 1 to 5

In Comparative Examples 1 to 4, the procedure of Examples 1 to 4 was repeated wherein crosslinker 9 was used as the crosslinking agent with all other conditions remaining the same.

In Comparative Example 5, commercially available COPE 1 was dried and directly press-molded. The results are shown in Table 1.

**Table 1**

| | Examples | | | | Comparative Examples | | | | |
|---|---|---|---|---|---|---|---|---|---|
| | 1 | 2 | 3 | 4 | 1 | 2 | 3 | 4 | 5 |
| COPE 1 | 50 | 50 | 50 | 50 | 50 | 50 | 50 | 50 | 100 |
| ACM 1 | 50 | - | - | - | 50 | - | - | - | - |
| ACM 2 | - | 50 | - | - | - | 50 | - | - | - |
| ACM 3 | - | - | 50 | - | - | - | 50 | - | - |
| ACM 4 | - | - | - | 50 | - | - | - | 50 | - |
| Crosslinker 1 | 0.5 | 1.0 | 1.6 | 2.1 | - | - | - | - | - |
| Crosslinker 9 | - | - | - | - | 0.5 | 1.0 | 1.6 | 2.1 | - |

| Original Physical Properties | | | | | | | | | |
|---|---|---|---|---|---|---|---|---|---|
| Hardness JIS A | 83 | 85 | 85 | 86 | 82 | 84 | 84 | 85 | 96 |
| 50% Modulus (MPa) | 4.2 | 4.8 | 5.4 | 5.8 | 3.5 | 3.7 | 3.9 | 4.2 | 11.9 |
| Tensile strength (MPa) | 13.5 | 15.0 | 16.0 | 15.9 | 11.0 | 10.2 | 11.5 | 11.9 | 23.7 |
| Elongation (%) | 300 | 230 | 180 | 150 | 620 | 380 | 320 | 280 | 690 |
| Elongation set (%) | 17.2 | 17.3 | 17.2 | 17.0 | 25.1 | 23.3 | 21.8 | 20.2 | 31.0 |

| 100°C Physical Properties | | | | | | | | | |
|---|---|---|---|---|---|---|---|---|---|
| 50% Modulus (MPa) | 2.6 | 3.2 | 3.5 | 3.7 | 1.7 | 1.9 | 2.2 | 2.3 | 6.3 |
| Tensile strength (MPa) | 4.5 | 6.0 | 6.1 | 6.3 | 3.8 | 4.1 | 4.2 | 4.4 | 13.5 |
| Elongation (%) | 160 | 140 | 130 | 110 | 320 | 220 | 190 | 170 | 600 |

| Oil resistance (JIS No. 3 oil, 100°C x 7 days) | | | | | | | | | |
|---|---|---|---|---|---|---|---|---|---|
| Volume change (%) | 15.6 | 15.3 | 14.2 | 13.4 | 17.7 | 17.1 | 16.1 | 15.5 | 18.2 |

| Compression set (120°C x 22 Hr) | | | | | | | | | |
|---|---|---|---|---|---|---|---|---|---|
| Compression set (%) | 59 | 57 | 54 | 53 | 71 | 70 | 67 | 65 | 88 |

As seen from Table 1, the compositions of the invention prepared with crosslinker 1 (Examples 1 to 4) have a higher modulus (modulus at 50% elongation), a higher tensile strength and a better elongation set, than those of the compositions (Comparative Examples 1 to 4) prepared with crosslinker 9 which is a typical conventional crosslinking agent for an epoxy group-containing acrylic rubber. Thus, the compositions of the invention exhibit improved rubber elasticity characteristics. Further, the compositions of the invention exhibit a high modulus and a high tensile strength even at 100°C, and improved oil resistance and compression set resistance.

As shown above, the thermoplastic elastomer composition comprising a thermoplastic copolyester elastomer or thermoplastic copolyamide elastomer and an epoxy group-containing methacrylate or acrylate copolymer rubber, which is crosslinked with the specific crosslinking agent of the invention, exhibit improved characteristics as compared with those of the compositions crosslinked with a conventional crosslinking agent for an epoxy group-containing acrylic rubber. Especially, when the content of glycidyl methacrylate units in the epoxy group-containing methacrylate or acrylate copolymer rubber is at least 5.0 phr, the improved characteristics are prominently developed.

### Examples 5 to 7, Comparative Example 6

Thermoplastic elastomer compositions were prepared from COPE 1, ACM 3 and crosslinker 1 under the same conditions as employed in Examples 1 to 4, wherein the amount of crosslinker 1 was varied depending upon the amount of epoxy group in ACM 3 and the proportion of COPE 1 to ACM 3 was varied as shown in Table 2. The results of evaluation of the elastomer compositions are shown in Table 2.

**Table 2**

| | Examples | | | Comp. Ex. |
|---|---|---|---|---|
| | 5 | 6 | 7 | 6 |
| COPE 1 | 80 | 60 | 40 | 20 |
| ACM 3 | 20 | 40 | 60 | 80 |
| Crosslinker 1 | 0.64 | 1.28 | 1.92 | 2.56 |

| Original Physical Properties | | | | |
|---|---|---|---|---|
| Hardness JIS A | 93 | 88 | 81 | 63 |
| 50% Modulus (MPa) | 9.2 | 6.8 | 4.5 | 1.7 |
| Tensile strength (MPa) | 21.2 | 17.4 | 13.0 | 7.2 |
| Elongation (%) | 330 | 200 | 150 | 90 |
| Elongation set (%) | 27.0 | 19.8 | 13.7 | - |

As seen from Table 2, the compositions of the invention (Examples 5 to 7) exhibited a high modulus, a high tensile strength and a good elongation set. In contrast, the composition of COPE 1/ACM 3 = 20/80 (%) (Comparative Example 6) was inferior in these properties, and elongation was very reduced and the test of the elongation set at 100% elongation could not be conducted because the sample was broken during the test.

Further, an extrusion test was conducted on the compositions of Example 7 and Comparative Example 6 by using a plastomill with a single screw extruder having a diameter of 20 mm and a slit die having a slit of 1.0 mm at 230°C. The composition of Example 7 was capable of being extruded into a sheet, but the composition of Comparative Example 6 could not be extruded.

### Examples 8 to 10, Comparative Example 7

Thermoplastic elastomer compositions were prepared under the same conditions employed in Examples 1 to 4 wherein COPE, ACM and the crosslinkers were used according to the recipes shown in Table 3. The properties of the compositions were evaluated. The results are shown in Table 3.

As seen from Table 3, the compositions of the invention exhibited a high modulus, a high tensile strength, a good elongation set and an improved resistance to heat aging in air. In contrast, the composition of Comparative Example 7 was inferior in these properties which comprised a copolyester elastomer and an acrylic rubber with halogen crosslinking sites crosslinked with a conventional sodium stearate crosslinking agent.

**Table 3**

| | | Examples | | | Comp. Ex. |
|---|---|---|---|---|---|
| | | 8 | 9 | 10 | 7 |
| COPE 1 | | 50 | 50 | 50 | 50 |
| ACM 3 | | 50 | 50 | 50 | - |
| ACM 5 | | - | - | - | 50 |
| Crosslinker 2 | | 1.9 | - | - | - |
| Crosslinker 3 | | - | 0.8 | - | - |
| Crosslinker 4 | | - | - | 2.3 | - |
| Crosslinker 10 | | - | - | - | 2.1 |

| Original Physical Properties | | | | | |
|---|---|---|---|---|---|
| Hardness | JIS A | 83 | 84 | 83 | 80 |
| 50% Modulus | (MPa) | 5.0 | 5.2 | 5.3 | 3.6 |
| Tensile strength | (MPa) | 15.2 | 15.8 | 15.3 | 10.9 |
| Elongation | (%) | 240 | 230 | 200 | 430 |
| Elongation set | (%) | 18.2 | 17.5 | 17.4 | 26.0 |

| Resistance to Heat Aging in Air (150°C x 10 days) | | | | | |
|---|---|---|---|---|---|
| Elongation retention | (%) | 53 | 48 | 57 | 42 |

### Examples 11 and 12

Thermoplastic elastomer compositions were prepared under the same conditions as employed in Example 1 to 4 wherein COPE 2 and COPE 3 were used as the copolyester elastomer. The properties of the compositions were evaluated. The results are shown in Table 4.

**Table 4**

| | | Examples | |
|---|---|---|---|
| | | 11 | 12 |
| COPE 2 | | 50 | - |
| COPE 3 | | - | 50 |
| ACM 2 | | 50 | 50 |
| Crosslinker 1 | | 0.95 | 0.95 |

| Original Physical Properties | | | |
|---|---|---|---|
| Hardness | JIS A | 89 | 91 |
| 50% Modulus | (MPa) | 6.9 | 7.5 |
| Tensile strength | (MPa) | 17.9 | 19.3 |
| Elongation | (%) | 220 | 210 |
| Elongation set | (%) | 22.2 | 21.6 |

### Examples 13 to 16

Thermoplastic elastomer compositions were prepared under the same conditions as employed in Examples 1 to 4 wherein crosslinker 5 was used instead of crosslinker 1 with all other conditions remaining the same. The properties of the compositions were evaluated. The results are shown in Table 5. For comparison, the results of Comparative Examples 1 to 5 also are shown in Table 5.

As seen from Table 5, the compositions of the invention prepared with crosslinker 5 (Examples 13 to 16) have a higher modulus (modulus at 50% elongation), a higher tensile strength and a better elongation set, than those of the compositions (Comparative Examples 1 to 4) prepared with crosslinker 9 which is a typical conventional crosslinking agent for an epoxy group-containing acrylic rubber. Thus, the compositions of the invention exhibit improved rubber elasticity characteristics. Further, the compositions of the invention exhibit a high modulus and a high tensile strength even at 100°C, and improved oil resistance and compression set resistance.

**Table 5**

| | | Examples | | | | Comparative Examples | | | | |
|---|---|---|---|---|---|---|---|---|---|---|
| | | 13 | 14 | 15 | 16 | 1 | 2 | 3 | 4 | 5 |
| COPE 1 | | 50 | 50 | 50 | 50 | 50 | 50 | 50 | 50 | 100 |
| ACM 1 | | 50 | - | - | - | 50 | - | - | - | - |
| ACM 2 | | - | 50 | - | - | - | 50 | - | - | - |
| ACM 3 | | - | - | 50 | - | - | - | 50 | - | - |
| ACM 4 | | - | - | - | 50 | - | - | - | 50 | - |
| Crosslinker 5 | | 0.16 | 1.32 | 0.50 | 0.64 | - | - | - | - | - |
| Crosslinker 9 | | - | - | - | - | 0.5 | 1.0 | 1.6 | 2.1 | - |

| Original Physical Properties | | | | | | | | | | |
|---|---|---|---|---|---|---|---|---|---|---|
| Hardness | JIS A | 82 | 84 | 85 | 85 | 82 | 84 | 84 | 85 | 96 |
| 50% Modulus | (MPa) | 4.1 | 4.5 | 5.3 | 5.6 | 3.5 | 3.7 | 3.9 | 4.2 | 11.9 |
| Tensile strength | (MPa) | 13.1 | 14.5 | 15.6 | 16.2 | 11.0 | 10.2 | 11.5 | 11.9 | 23.7 |
| Elongation | (%) | 300 | 240 | 180 | 140 | 620 | 380 | 320 | 280 | 690 |
| Elongation set | (%) | 18.3 | 18.0 | 17.9 | 17.7 | 25.1 | 23.3 | 21.8 | 20.2 | 31.0 |

| 100°C Physical Properties | | | | | | | | | | |
|---|---|---|---|---|---|---|---|---|---|---|
| 50% Modulus | (MPa) | 2.3 | 3.0 | 3.4 | 3.6 | 1.7 | 1.9 | 2.2 | 2.3 | 6.3 |
| Tensile strength | (MPa) | 4.3 | 5.5 | 6.2 | 6.0 | 3.8 | 4.1 | 4.2 | 4.4 | 13.5 |
| Elongation | (%) | 180 | 150 | 140 | 100 | 320 | 220 | 190 | 170 | 600 |

| Oil resistance (JIS No. 3 oil, 100°C x 7 days) | | | | | | | | | | |
|---|---|---|---|---|---|---|---|---|---|---|
| Volume change | (%) | 16.0 | 15.6 | 14.5 | 13.7 | 17.7 | 17.1 | 16.1 | 15.5 | 18.2 |

| Compression set (120°C x 22 Hr) | | | | | | | | | | |
|---|---|---|---|---|---|---|---|---|---|---|
| Compression set | (%) | 64 | 60 | 58 | 58 | 71 | 70 | 67 | 65 | 88 |

As shown above, the thermoplastic elastomer composition comprising a thermoplastic copolyester elastomer or thermoplastic copolyamide elastomer and an epoxy group-containing methacrylate or acrylate copolymer rubber, which is crosslinked with the specific crosslinking agent of the invention, exhibit improved characteristics as compared with those of the compositions crosslinked with a conventional crosslinking agent for an epoxy group-containing acrylic rubber. Especially, when the content of glycidyl methacrylate units in the epoxy group-containing methacrylate or acrylate copolymer rubber is at least 5.0 phr, the improved characteristics are prominently developed.

### Examples 17 to 19, Comparative Example 8

Thermoplastic elastomer compositions were prepared from COPE 1, ACM 3 and crosslinker 5 under the same conditions as employed in Examples 1 to 4, wherein the amount of crosslinker 5 was varied depending upon the amount of epoxy group in ACM 3 and the proportion of COPE 1 to ACM 3 was varied as shown in Table 6. The results of evaluation of the elastomer compositions are shown in Table 6.

**Table 6**

| | | Examples | | | Comp. Ex. |
|---|---|---|---|---|---|
| | | 18 | 19 | 20 | 8 |
| COPE 1 | | 80 | 60 | 40 | 20 |
| ACM 3 | | 20 | 40 | 60 | 80 |
| Crosslinker 1 | | 0.20 | 0.40 | 0.60 | 0.80 |

| Original Physical Properties | | | | | |
|---|---|---|---|---|---|
| Hardness | JIS A | 93 | 87 | 80 | 60 |
| 50% Modulus | (MPa) | 9.5 | 6.7 | 4.3 | 1.4 |
| Tensile strength | (MPa) | 20.9 | 17.0 | 12.7 | 7.0 |
| Elongation | (%) | 350 | 230 | 160 | 100 |
| Elongation set | (%) | 28.2 | 20.5 | 14.6 | - |

As seen from Table 6, the compositions of the invention (Examples 17 to 19) exhibited a high modulus, a high tensile strength and a good elongation set. In contrast, the composition of COPE 1/ACM 3 = 20/80 (%) (Comparative Example 8) was inferior in these properties, and elongation was very reduced and the test of the elongation set at 100% elongation could not be conducted because the sample was broken during the test.

Further, an extrusion test was conducted on the compositions of Example 19 and Comparative Example 8 by using a plastomill with a single screw extruder having a diameter of 20 mm and a slit die having a slit of 1.0 mm at 230°C. The composition of Example 19 was capable of being extruded into a sheet, but the composition of Comparative Example 8 could not be extruded.

### Examples 20 to 22, Comparative Example 9

Thermoplastic elastomer compositions were prepared under the same conditions employed in Examples 1 to 4 wherein COPE, ACM and the crosslinkers were used according to the recipes shown in Table 7. The properties of the compositions were evaluated. The results are shown in Table 7. The results of Comparative Example 9 also are shown in Table 7.

**Table 7**

| | | Examples | | | Comp. Ex. |
|---|---|---|---|---|---|
| | | 20 | 21 | 22 | 9 |
| COPE 1 | | 50 | 50 | 50 | 50 |
| ACM 3 | | 50 | 50 | 50 | - |
| ACM 5 | | - | - | - | 50 |
| Crosslinker 2 | | 0.40 | - | - | - |
| Crosslinker 6 | | - | 0.50 | - | - |
| Crosslinker 7 | | - | - | 0.57 | - |
| Crosslinker 8 | | 0.10 | - | - | - |
| Crosslinker 10 | | - | - | - | 2.14 |

| Original Physical Properties | | | | | |
|---|---|---|---|---|---|
| Hardness | JIS A | 84 | 85 | 84 | 81 |
| 50% Modulus | (MPa) | 5.2 | 5.3 | 5.1 | 3.7 |
| Tensile strength | (MPa) | 15.3 | 16.3 | 15.0 | 11.2 |
| Elongation | (%) | 190 | 170 | 190 | 400 |
| Elongation set | (%) | 18.1 | 17.3 | 18.2 | 25.6 |

| Resistance to Heat Aging in Air (150°C x 10 days) | | | | | |
|---|---|---|---|---|---|
| Elongation retention | (%) | 46 | 49 | 52 | 42 |

As seen from Table 7, the compositions of the invention exhibited a high modulus, a high tensile strength, a good elongation set and an improved resistance to heat aging in air. In the crosslinking agents used in the invention, it is proved that the intended good properties are obtained in both cases where the polycarboxylic acid and the imidazole compound are added separately (Example 20) and are added after these are converted to a composite salt (Examples 21 and 22). In contrast, the composition of Comparative Example 9 was inferior in these properties which comprised a copolyester elastomer and an acrylic rubber with. halogen crosslinking sites crosslinked with a conventional sodium stearate crosslinking agent.

### Examples 23 to 25

Thermoplastic elastomer compositions were prepared under the same conditions as employed in Example 1 to 4 wherein COPE 2 and COPE 3 were used as the copolyester elastomer and COPA 1 was used as the copolyamide elastomer. The properties of the compositions were evaluated. The results are shown in Table 8.

**Table 8**

| | | Examples | | |
|---|---|---|---|---|
| | | 23 | 24 | 25 |
| COPE 2 | | 50 | - | - |
| COPE 3 | | - | 50 | - |
| COPA 1 | | - | - | 50 |
| ACM 2 | | 50 | 50 | 50 |
| Crosslinker 5 | | 0.32 | 0.32 | 0.32 |

| Original Physical Properties | | | | |
|---|---|---|---|---|
| Hardness | JIS A | 87 | 89 | 87 |
| 50% Modulus | (MPa) | 6.6 | 7.3 | 5.5 |
| Tensile strength | (MPa) | 17.0 | 18.2 | 14.1 |
| Elongation | (%) | 240 | 230 | 250 |
| Elongation set | (%) | 23.4 | 25.1 | 24.2 |

### Industrial Applicability

Rubber articles made from the thermoplastic elastomer composition of the invention are flexible and have a high modulus, a good heat aging resistance and a good compression set resistance. Therefore, the rubber articles have various uses which include industrial parts, mineral parts, construction parts, automobile parts, electrical and electronic parts and sport goods. Especially, the rubber articles are valuable as automobile hoses and tubes such as a fuel hose, an oil hose, a power steering hose, a brake hose and water hose; hoses and tubes of various industrial and mineral machines such as a hydraulic pressure hose, an air hose, a water hose and a chemicals-transporting hose; various seals such as an O-ring, a packing, gaskets and oil seals; diaphragms; belts such as a plain belt, a V-belt and a geared belt; bellows type boots such as a uniformly moving joint boot and a dust cover boot; interior and exterior automobile trims such as a bumper, aero-parts, a front fender and a mat-guard; various rolls; and linings for various machines.

## Claims

1. A thermoplastic elastomer composition comprising:
(A) 30 to 90% by weight of a thermoplastic copolyester elastomer or a thermoplastic copolyamide elastomer, and
(B) 10 to 70% by weight of an epoxy group-containing methacrylate or acrylate copolymer rubber;
wherein component (B) is crosslinked with a crosslinking agent and dispersed in the composition; and said crosslinking agent is at least one member selected from:
(b) a combination of a compound having at least two carboxyl groups or at least one carboxylic anhydride group in the molecule with an imidazole compound, and
(c) a combination of an isocyanuric acid compound with an imidazole compound.

2. A thermoplastic elastomer composition as claimed in claim 1, wherein said thermoplastic copolyester elastomer is at least one member selected from a copolyetherester elastomer, a polylactone-modified or lactone-modified copolyetherester elastomer and a copolyetherimide-ester elastomer.

3. A thermoplastic elastomer composition as claimed in claim 1, wherein said thermoplastic copolyamide elastomer is at least one member selected from a copolyetheresteramide elastomer and a copolyesteramide elastomer.

4. A thermoplastic elastomer composition as claimed in any of claims 1 to 3, wherein said epoxy group-containing methacrylate or acrylate copolymer rubber contains, as the epoxy group, units derived from at least one epoxy group-containing monomer selected from glycidyl methacrylate, glycidyl acrylate and allyl glycidyl ether.

5. A thermoplastic elastomer composition as claimed in any of claims 1 to 3, wherein said epoxy group-containing methacrylate or acrylate copolymer rubber contains 1 to 15% by weight of units derived from an epoxy group-containing monomer.

6. A thermoplastic elastomer composition as claimed in claim 1, wherein said compound having at least two carboxyl groups in the molecule and said compound having at least one carboxylic anhydride group in the molecule, which are used as the crosslinking agent for the epoxy group-containing methacrylate or acrylate copolymer rubber in combination with the imidazole compound, are selected from aliphatic, alicyclic and aromatic polycarboxylic acids, partial or complete carboxylic anhydrides thereof, and partial or complete esters of these polycarboxylic acids or carboxylic anhydrides with a polyalkylene glycol or an alkylene glycol.

7. A thermoplastic elastomer composition as claimed in claim 1, wherein said component (b) and said component (c), which are used as the crosslinking agent for the epoxy group-containing methacrylate or acrylate copolymer rubber, are a composite salt of the compound having at least two carboxyl groups or at least one carboxylic anhydride group in the molecule with the imidazole compound and a composite salt of the isocyanuric acid compound with the imidazole compound, respectively.

8. A thermoplastic elastomer composition as claimed in claim 1 or claim 7, wherein, in said component (b), the proportion of the imidazole compound to the compound having at least two carboxyl groups or at least one carboxylic anhydride group in the molecule is such that the imidazole compound is 0.2 to 2 moles per mole of a carboxyl group (a carboxylic anhydride group is equivalent to two carboxyl groups); and, in said component (c), the proportion of the imidazole compound to the isocyanuric acid compound is such that the imidazole compound is 0.2 to 2 moles per mole of the acid group in the isocyanuric acid compound.

9. A thermoplastic elastomer composition as claimed in claim 1, claim 6 or claim 7, wherein the amount of the crosslinking agent is such that the carboxyl group (a carboxylic anhydride group is equivalent to two carboxyl groups) or the acid group in the isocyanuric acid compound is 0.05 to 5 moles per mole of the epoxy group in the epoxy group-containing methacrylate or acrylate copolymer.

10. A thermoplastic elastomer composition comprising:
(A) 30 to 90% by weight of a thermoplastic copolyester elastomer or a thermoplastic copolyesteramide elastomer, and
(B) 10 to 70% by weight of an epoxy group-containing methacrylate or acrylate copolymer rubber;
wherein component (B) is crosslinked with (a) a compound having at least two carboxyl groups or at least one carboxylic anhydride group in the molecule under kneading conditions and dispersed in the composition.

11. A thermoplastic elastomer composition as claimed in claim 10, wherein said thermoplastic copolyester elastomer is at least one member selected from a copolyetherester elastomer, a polylactone-modified or lactone-modified copolyetherester elastomer and a copolyetherimide-ester elastomer.

12. A thermoplastic elastomer composition as claimed in claim 10 or 11, wherein said epoxy group-containing methacrylate or acrylate copolymer rubber contains, as the epoxy group, units derived from at least one epoxy group-containing monomer selected from glycidyl methacrylate, glycidyl acrylate and allyl glycidyl ether.

13. A thermoplastic elastomer composition as claimed in claim 10 or 11, wherein said epoxy group-containing methacrylate or acrylate copolymer rubber contains 1 to 15% by weight of units derived from an epoxy group-containing monomer.

14. A thermoplastic elastomer composition as claimed in claim 10, wherein said compound having at least two carboxyl groups or at least one carboxylic anhydride group in the molecule, which is used as the crosslinking agent for the epoxy group-containing methacrylate or acrylate copolymer rubber, is selected from aliphatic, alicyclic and aromatic polycarboxylic acids, partial or complete carboxylic anhydrides thereof, and partial or complete esters of these polycarboxylic acids or carboxylic anhydrides with a polyalkylene glycol or an alkylene glycol.

15. A thermoplastic elastomer composition as claimed in claim 10 or 14, wherein the amount of the crosslinking agent is such that the carboxyl group (a carboxylic anhydride group is equivalent to two carboxyl groups) is 0.05 to 5 moles per mole of the epoxy group in the epoxy group-containing methacrylate or acrylate copolymer.

## Patentansprüche

1. Thermoplastische Elastomerzusammensetzung, umfassend:
(A) 30 bis 90 Gew.% eines thermoplastischen Copolyesterelastomers oder eines thermoplastischen Copolyamidelastomers und
(B) 10 bis 70 Gew.% eines epoxygruppenhaltigen Methacrylat- oder Acrylatcopolymerkautschuks;
wobei Bestandteil (B) mit einem Vernetzungsmittel vernetzt und in der Zusammensetzung dispergiert ist; und das Vernetzungsmittel ist wenigstens ein Vertreter gewählt aus:
(b) einer Kombination einer Verbindung mit wenigstens 2 Carboxylgruppen oder wenigstens 1 Carbonsäureanhydridgruppe im Molekül mit einer Imidazolverbindung und
(c) einer Kombination einer Isocyanursäureverbindung mit einer Imidazolverbindung.

2. Thermoplastische Elastomerzusammensetzung nach Anspruch 1, wobei das thermoplastische Copolyesterelastomer wenigstens ein Vertreter, gewählt aus einem Copolyetheresterelastomer, einem polylacton-oder lactonmodifizierten Copolyetheresterelastomer und einem Copolyetherimidesterelastomer, ist.

3. Thermoplastische Elastomerzusammensetzung nach Anspruch 1, wobei das thermoplastische Copolyamidelastomer wenigstens ein Vertreter, gewählt aus einem Copolyetheresteramidelastomer und einem Copolyesteramidelastomer, ist.

4. Thermoplastische Elastomerzusammensetzung nach einem der Ansprüche 1 bis 3, wobei der epoxygruppenhaltige Methacrylat- oder Acrylatcopolymerkautschuk als die Epoxygruppe Einheiten enthält, die aus wenigstens einem epoxygruppenhaltigen Monomer, gewählt aus Glycidylmethacrylat, Glycidylacrylat und Allylglycidylether, stammen.

5. Thermoplastische Elastomerzusammensetzung nach einem der Ansprüche 1 bis 3, wobei der epoxygruppenhaltige Methacrylat- oder Acrylatcopolymerkautschuk 1 bis 15 Gew.% Einheiten enthält, die aus einem epoxygruppenhaltigen Monomer stammen.

6. Thermoplastische Elastomerzusammensetzung nach Anspruch 1, wobei die Verbindung mit wenigstens 2 Carboxylgruppen im Molekül und die Verbindung mit wenigstens 1 Carbonsäureanhydridgruppe im Molekül, die in Kombination mit der Imidazolverbindung als Vernetzungsmittel für den epoxygruppenhaltigen Methacrylat- oder Acrylatcopolymerkautschuk verwendet werden, aus aliphatischen, alicyclischen und aromatischen Polycarbonsäuren, deren partiellen oder vollständigen Carbonsäureanhydriden und den partiellen oder vollständigen Estern dieser Polycarbonsäuren oder Carbonsäureanhydride mit einem Polyalkylenglykol oder einem Alkylenglykol gewählt werden.

7. Thermoplastische Elastomerzusammensetzung nach Anspruch 1, wobei Bestandteil (b) und Bestandteil (c), die als Vernetzungsmittel für den epoxygruppenhaltigen Methacrylat- oder Acrylatcopolymerkautschuk verwendet werden, ein Salz aus der Verbindung mit wenigstens 2 Carboxylgruppen oder wenigstens 1 Carbonsäureanhydridgruppe im Molekül mit der Imidazolverbindung bzw. ein Salz aus der Isocyanursäureverbindung mit der Imidazolverbindung sind.

8. Thermoplastische Elastomerzusammensetzung nach Anspruch 1 oder 7, wobei im Bestandteil (b) das Verhältnis der Imidazolverbindung zur Verbindung mit wenigstens 2 Carboxylgruppen oder wenigstens 1 Carbonsäureanhydridgruppe im Molekül so ist, daß die Imidazolverbindung 0,2 bis 2 Mol je Mol Carboxylgruppe ist (eine Carbonsäureanhydridgruppe entspricht 2 Carboxylgruppen); und im Bestandteil (c) das Verhältnis der Imidazolverbindung zur Isocyanursäureverbindung so ist, daß die Imidazolverbindung 0,2 bis 2 Mol je Mol Säuregruppe in der Isocyanursäureverbindung ist.

9. Thermoplastische Elastomerzusammensetzung nach Anspruch 1, 6 oder 7, wobei die Menge an Vernetzungsmittel so ist, daß die Carboxylgruppe (eine Carbonsäureanhydridgruppe entspricht 2 Carboxylgruppen) oder Säuregruppe in der Isocyanursäureverbindung 0,05 bis 5 Mol je Mol Epoxygruppe im epoxygruppenhaltigen Methacrylat- oder Acrylatcopolymer beträgt.

10. Thermoplastische Elastomerzusammensetzung, umfassend:
(A) 30 bis 90 Gew.% eines thermoplastischen Copolyesterelastomers oder eines thermoplastischen Copolyesteramidelastomers und
(B) 10 bis 70 Gew.% eines epoxygruppenhaltigen Methacrylat- oder Acrylatcopolymerkautschuks;
wobei Bestandteil (B) mit (a) einer Verbindung mit wenigstens 2 Carboxylgruppen oder wenigstens 1 Carbonsäureanhydridgruppe im Molekül unter Knetbedingungen vernetzt und in der Zusammensetzung dispergiert ist.

11. Thermoplastische Elastomerzusammensetzung nach Anspruch 10, wobei das thermoplastische Copolyesterelastomer wenigstens ein Vertreter, gewählt aus einem Copolyetheresterelastomer, einem polylacton- oder lactonmodifizierten Copolyetheresterelastomer und einem Copolyetherimidesterelastomer, ist.

12. Thermoplastische Elastomerzusammensetzung nach Anspruch 10 oder 11, wobei der epoxygruppenhaltige Methacrylat- oder Acrylatcopolymerkautschuk als Epoxygruppe Einheiten enthält, die aus wenigstens einem epoxygruppenhaltigen Monomer, gewählt aus Glycidylmethacrylat, Glycidylacrylat und Allylglycidylether, stammen.

13. Thermoplastische Elastomerzusammensetzung nach Anspruch 10 oder 11, wobei der epoxygruppenhaltige Methacrylat- oder Acrylatcopolymerkautschuk 1 bis 15 Gew.% Einheiten enthält, die aus einem epoxygruppenhaltigen Monomer stammen.

14. Thermoplastische Elastomerzusammensetzung nach Anspruch 10, wobei die Verbindung mit wenigstens 2 Carboxylgruppen oder wenigstens 1 Carbonsäureanhydridgruppe im Molekül, die als Vernetzungsmittel für den epoxygruppenhaltigen Methacrylat- oder Acrylatcopolymerkautschuk verwendet wird, aus aliphatischen. alicyclischen und aromatischen Polycarbonsäuren, deren partiellen oder vollständigen Carbonsäureanhydriden und den partiellen oder vollständigen Estern dieser Polycarbonsäuren oder Carbonsäureanhydride mit einem Polyalkylenglykol oder einem Alkylenglykol gewählt wird.

15. Thermoplastische Elastomerzusammensetzung nach Anspruch 10 oder 14, wobei die Menge an Vernetzungsmittel so ist, daß die Carboxylgruppe (eine Carbonsäureanhydridgruppe entspricht 2 Carboxylgruppen) 0,05 bis 5 Mol je Mol Epoxygruppe im epoxygruppenhaltigen Methacrylat- oder Acrylatcopolymer ist.

## Revendications

1. Composition d'élastomère thermoplastique comprenant :
(A) 30 à 90 % en poids d'un élastomère copolyester thermoplastique ou d'un élastomère copolyamide thermoplastique et
(B) 10 à 70 % en poids d'un caoutchouc copolymère de méthacrylate ou d'acrylate contenant un groupe époxy ;
où le composant (B) est réticulé avec un agent réticulant et dispersé dans la composition, et ledit agent réticulant est au moins un composant choisi parmi :
(b) une combinaison d'un composé ayant au moins deux groupes carboxy ou au moins un groupe anhydride carboxylique dans sa molécule avec un composé imidazole et
(c) une combinaison d'un composé acide isocyanurique avec un composé imidazole.

2. Composition d'élastomère thermoplastique selon la revendication 1, où ledit élastomère copolyester thermoplastique est au moins un composant choisi parmi un élastomère copolyétherester, un élastomère copolyétherester modifié avec une polylactone ou modifié avec une lactone et un élastomère copolyétherimide-ester.

3. Composition d'élastomère thermoplastique selon la revendication 1, où ledit élastomère copolyamide thermoplastique est au moins un composant choisi parmi un élastomère copolyétheresteramide et un élastomère copolyesteramide.

4. Composition d'élastomère thermoplastique selon l'une quelconque des revendications 1 à 3, où ledit caoutchouc copolymère de méthacrylate ou d'acrylate contenant un groupe époxy contient, comme groupe époxy, des motifs dérivés d'au moins un monomère contenant un groupe époxy choisi parmi le méthacrylate de glycidyle, l'acrylate de glycidyle et l'éther allylglycidylique.

5. Composition d'élastomère thermoplastique selon l'une quelconque des revendications 1 à 3, où ledit caoutchouc copolymère de méthacrylate ou d'acrylate contenant un groupe époxy contient 1 à 15 % en poids de motifs dérivés d'un monomère contenant un groupe époxy.

6. Composition d'élastomère thermoplastique selon la revendication 1, où ledit composé ayant au moins deux groupes carboxy dans sa molécule et ledit composé ayant au moins un groupe anhydride carboxylique dans sa molécule, que l'on utilise comme agent réticulant pour le caoutchouc copolymère de méthacrylate ou d'acrylate contenant un groupe époxy en combinaison avec le composé imidazole, sont choisis parmi les acides polycarboxyliques aliphatiques, alicycliques et aromatiques, leurs anhydrides carboxyliques partiels ou complets, et les esters partiels ou complets de ces acides polycarboxyliques ou anhydrides carboxyliques avec un polyalkylèneglycol ou un alkylèneglycol.

7. Composition d'élastomère thermoplastique selon la revendication 1, où ledit composant (b) et ledit composant (c), que l'on utilise comme agent réticulant pour le caoutchouc copolymère de méthacrylate ou d'acrylate contenant un groupe époxy, sont respectivement un sel composite du composé ayant au moins deux groupes carboxy ou au moins un groupe anhydride carboxylique dans sa molécule avec le composé imidazole et un sel composite du composé acide isocyanurique avec le composé imidazole.

8. Composition d'élastomère thermoplastique selon la revendication 1 ou la revendication 7, où, dans ledit composant (b), le rapport du composé imidazole au composé ayant au moins deux groupes carboxy ou au moins un groupe anhydride carboxylique dans sa molécule est tel que la quantité du composé imidazole soit de 0,2 à 2 moles par mole d'un groupe carboxy (un groupe anhydride carboxylique est équivalent à deux groupes carboxy) ; et dans ledit composant (c), le rapport du composé imidazole au composé acide isocyanurique est tel que la quantité du composé imidazole soit de 0,2 à 2 moles par mole du groupe acide dans le composé acide isocyanurique.

9. Composition d'élastomère thermoplastique selon la revendication 1, la revendication 6 ou la revendication 7, où la quantité de l'agent réticulant est telle que la proportion du groupe carboxy (un groupe anhydride carboxylique est équivalent à deux groupes carboxy) ou du groupe acide dans le composé acide isocyanurique soit de 0,05 à 5 moles par mole du groupe époxy dans le copolymère de méthacrylate ou d'acrylate contenant un groupe époxy.

10. Composition d'élastomère thermoplastique comprenant :
(A) 30 à 90 % en poids d'un élastomère copolyester thermoplastique ou d'un élastomère copolyesteramide thermoplastique et
(B) 10 à 70 % en poids d'un caoutchouc copolymère de méthacrylate ou d'acrylate contenant un groupe époxy ;
où le composant (B) est réticulé avec (a) un composé ayant au moins deux groupes carboxy ou au moins un groupe anhydride carboxylique dans sa molécule dans des conditions de malaxage et dispersé dans la composition.

11. Composition d'élastomère thermoplastique selon la revendication 10, où ledit élastomère copolyester thermoplastique est au moins un composant choisi parmi un élastomère copolyétherester, un élastomère copolyétherester modifié avec une polylactone ou modifié avec une lactone, et un élastomère copolyétherimide-ester.

12. Composition d'élastomère thermoplastique selon la revendication 10 ou 11, où ledit caoutchouc copolymère de méthacrylate ou d'acrylate contenant un groupe époxy contient, comme groupe époxy, des motifs dérivés d'au moins un monomère contenant un groupe époxy choisi parmi le méthacrylate de glycidyle, l'acrylate de glycidyle et l'éther allylglycidylique.

13. Composition d'élastomère thermoplastique selon la revendication 10 ou 11, où ledit caoutchouc copolymère de méthacrylate ou d'acrylate contenant un groupe époxy contient 1 à 15 % en poids de motifs dérivés d'un monomère contenant un groupe époxy.

14. Composition d'élastomère thermoplastique selon la revendication 10, où ledit composé ayant au moins deux groupes carboxy ou au moins un groupe anhydride carboxylique dans sa molécule, que l'on utilise comme agent réticulant pour le caoutchouc copolymère de méthacrylate ou d'acrylate contenant un groupe époxy, est choisi parmi les acides polycarboxyliques aliphatiques, alicycliques et aromatiques, leurs anhydrides carboxyliques partiels ou complets et les esters partiels ou complets de ces acides polycarboxyliques ou anhydrides carboxyliques avec un polyalkylèneglycol ou un alkylèneglycol.

15. Composition d'élastomère thermoplastique selon la revendication 10 ou 14, où la quantité de l'agent réticulant est telle que la quantité du groupe carboxy (un groupe anhydride carboxylique est équivalent à deux groupes carboxy) soit de 0,05 à 5 moles par mole du groupe époxy dans le copolymère de méthacrylate ou d'acrylate contenant un groupe époxy.
